# FASCICULE DE BREVET EUROPEEN

(11) **EP 2 265 487 B1**
(45) Date de publication et mention de la délivrance du brevet: **02.11.2011**
(21) Numéro de dépôt: 09742250.5
(22) Date de dépôt: 07.04.2009
(51) Int. Cl.: B62D 65/02, B62D 25/08

(54) **GABARIT DE MISE EN PLACE D'ELEMENTS DE CARROSSERIE DE LA FACE AVANT D'UN VEHICULE AUTOMOBILE**
VORRICHTUNG ZUR POSITIONIERUNG VON ELEMENTEN EINER MOTORFAHRZEUG-VORDERVERKLEIDUNG
JIG FOR POSITIONING MOTOR VEHICLE FRONT END BODYWORK ELEMENTS

(30) Priorité: 17.04.2008 FR 0852620
(43) Date de publication de la demande: 29.12.2010
(73) Titulaire: Peugeot Citroën Automobiles SA, 78140 Vélizy-Villacoublay (FR)
(72) Inventeur: TANGUY, Thierry, F-93100 Montreuil (FR); BOUTONNET, Alain, F-25200 Montbeliard (FR); HEUCLIN, Stéphane, F-78280 Guyancourt (FR)
(74) Mandataire: Allain, Laurent
(86) Numéro de dépôt international: PCT/FR2009/050586
(87) Numéro de publication internationale: WO 2009/136052

(56) Documents cités:
- FR-A- 2 786 152
- US-A- 4 779 336

## Description

La présente invention concerne un gabarit de mise en place d'éléments de carrosserie de la face avant d'un véhicule automobile, du type comprenant des moyens de préhension et de maintien des éléments de carrosserie à mettre en place, le gabarit étant apte à assurer le positionnement des moyens de préhension et de maintien par rapport à la caisse suivant une première direction verticale et suivant une deuxième et une troisième directions horizontales, toutes orthogonales entre elles.

Le document FR-A-2 786 152 décrit un tel gabarit qui, en l'occurrence, sert à la mise en place des ailes avant et d'éléments de référencement pour l'installation ultérieure du capot avant. Le gabarit comprend deux bâtis latéraux mobiles suivant les trois directions d'un repère orthogonal et un cadre de centrage relié à chacun des bâtis. Les bâtis latéraux prennent appui à l'extérieur des côtés de caisse et assurent le positionnement du bord arrière des ailes avant. Le cadre de centrage assure le positionnement du bord supérieur des ailes avant.

Néanmoins, le gabarit a un poids important, ce qui génère une inertie importante au déplacement, et un manque de fiabilité dans le positionnement.

Un but de l'invention est de fournir un gabarit fiable tout en limitant son coût.

A cet effet, l'invention a pour objet un gabarit du type précité, **caractérisé en ce que** le gabarit comporte :
- un cadre porteur destiné à prendre appui verticalement sur la caisse du véhicule et à porter l'ensemble du gabarit ;
- un cadre mobile de mise en place des éléments de carrosserie sur la caisse du véhicule, le cadre mobile étant monté mobile sur le cadre porteur et comprenant lesdits moyens de préhension et de maintien, le cadre mobile étant apte à assurer le positionnement des éléments de carrosserie suivant la deuxième et la troisième directions, le cadre porteur étant apte à assurer le positionnement du cadre mobile suivant la première direction.

Suivant des modes particuliers de réalisation, le gabarit comporte une ou plusieurs des caractéristiques suivantes, prise(s) isolément ou suivant toutes les combinaisons techniquement possibles :
- en position d'appui du cadre porteur, le cadre porteur est immobile suivant lesdites première, deuxième et troisième directions, tandis que le cadre mobile est mobile par rapport au cadre porteur uniquement suivant les deuxième et troisième directions ;
- le cadre porteur porte le cadre mobile au moyen d'au moins une liaison élastique sollicitant le cadre mobile en appui plan horizontal sur le cadre porteur ;
- la liaison élastique comprend un organe élastique fixé à une première extrémité au cadre porteur et fixé à une deuxième extrémité opposée au cadre mobile, l'organe élastique assurant au cadre mobile un débattement suivant la deuxième et la troisième directions par rapport à une position centrale de moindre sollicitation, le débattement de part et d'autre de la position centrale étant compris entre 1 mm et 5 mm, par exemple environ 3 mm ;
- un vérin de déplacement du cadre mobile par rapport au cadre porteur suivant ladite deuxième direction, de préférence un vérin à vis ;
- le gabarit comprend au moins une cale d'appui suivant ladite deuxième direction sur une porte avant du véhicule, la cale d'appui étant destinée à assurer un jeu esthétique et fonctionnel de débattement de la porte avant, entre la porte avant et une aile avant maintenue par le cadre mobile ;
- le gabarit comprend une barre centrale montée rotative sur le cadre mobile autour de ladite première direction et deux bras de centrage du cadre mobile par rapport à la caisse du véhicule automobile, la rotation de la barre assurant la translation suivant ladite troisième direction des bras d'appui de façon symétrique ;
- chaque bras d'appui présente une extrémité externe d'appui latéral sur le côté d'une porte avant, le centrage du cadre mobile suivant ladite troisième direction s'effectuant par rapport aux deux portes avant du véhicule automobile ;
- les moyens de préhension et de maintien des éléments de carrosserie comprennent un patin d'appui et/ou une ventouse de préhension solidaires de l'extrémité externe du bras d'appui, la ventouse étant de préférence en regard de l'élément d'appui ;
- les moyens de préhension et de maintien des éléments de carrosserie comprennent au moins deux éléments d'appui et deux ventouses de préhension solidaires de la structure du cadre mobile ;
- les moyens de préhension et de maintien comprennent un doigt pilote, de préférence à engagement manuel, destiné à pénétrer un trou correspondant de l'élément de carrosserie et assurant le positionnement de l'élément de carrosserie par rapport au cadre mobile dans au moins l'une des deuxième et troisième directions ; et
- les éléments de carrosserie comprennent une aile avant de véhicule automobile et/ou une plaquette 6 de support.

L'invention a également pour objet un véhicule automobile, **caractérisé en ce qu'**il comporte une caisse et au moins une aile avant mise en place au moyen du gabarit tel que décrit ci-dessus.

L'invention a encore pour objet un procédé de fabrication d'un véhicule automobile, comprenant une caisse, le procédé comprenant une étape de fixation d'une aile avant sur la caisse du véhicule, **caractérisé en ce que** le procédé utilise un gabarit tel que défini ci-dessus,
le procédé comprenant successivement une étape de :
- montage des ailes avant sur le cadre mobile ;
- positionnement du cadre porteur en appui sur la caisse ;
- positionnement du cadre mobile suivant ladite deuxième direction ;
- centrage du cadre mobile suivant ladite troisième direction; et
- fixation des ailes avant.

L'invention sera mieux comprise à la lecture de la description qui va suivre, donnée uniquement à titre d'exemple, et faite en se référant aux dessins annexés, sur lesquels :
- la figure 1 est un schéma cinématique en perspective d'une face avant de véhicule automobile et d'un gabarit de mise en place d'éléments de carrosserie de la face avant du véhicule automobile, selon l'invention ;
- la figure 2 est une vue schématique en perspective avant d'un cadre porteur du gabarit de la figure 1 ;
- la figure 3 est une vue schématique en perspective d'un point d'appui du cadre porteur de la figure 2 sur la caisse du véhicule ;
- la figure 4 est une vue schématique d'un élément de liaison élastique reliant le cadre porteur de la figure 2 à un cadre mobile du gabarit de la figure 1 ;
- la figure 5 est une vue schématique de dessous illustrant des moyens de déplacement entre le cadre porteur et le cadre mobile du gabarit de la figure 1 ;
- la figure 6 est une vue schématique latérale interne d'une extrémité d'un bras d'appui latéral du gabarit de la figure 1 ;
- la figure 7 est une vue schématique latérale de l'espacement entre une porte du véhicule automobile et une aile avant positionnée au moyen du gabarit de la figure 1 ;
- la figure 8 est une vue schématique d'une section verticale de deux ailes avant mises en place au moyen du gabarit de la figure 1 ; et
- la figure 9 est une vue schématique de dessus de plaquettes de fixation de pare-chocs avant mise en place au moyen du gabarit de la figure 1.

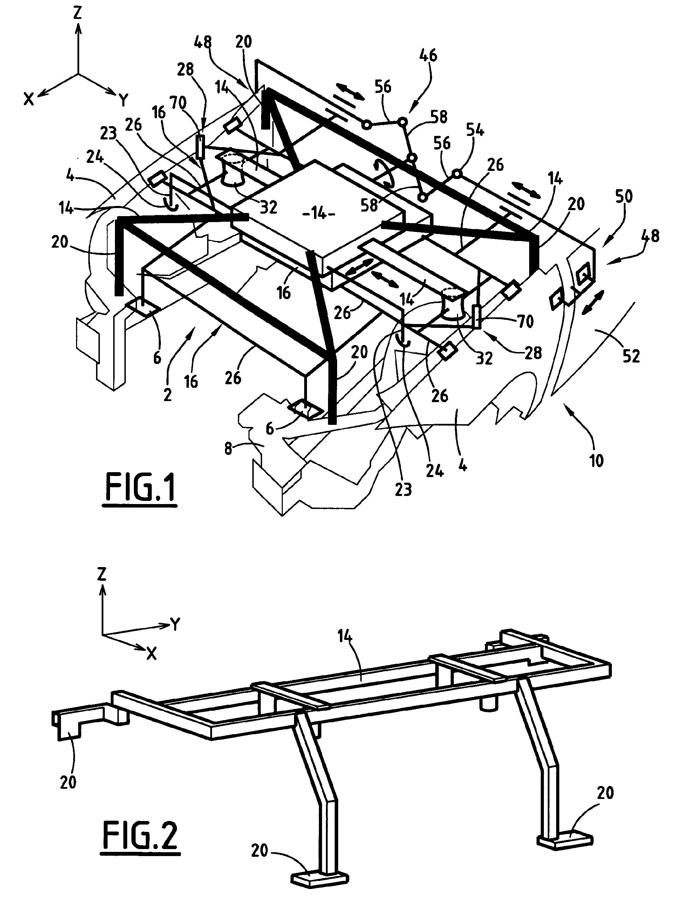

La figure 1 illustre un gabarit 2 de mise en place d'ailes avant 4 et de plaquettes romaines 6 de fixation de pare-chocs sur la face avant de la caisse 8 d'un véhicule automobile 10.

Dans tout ce qui suit, les termes "horizontal", "vertical", "longitudinal", "transversal", "gauche" et "droite" s'entendent par rapport au repère orthogonal usuel d'un véhicule automobile comprenant :
- un axe longitudinal X, horizontal et orienté de l'arrière vers l'avant ;
- un axe transversal Y, horizontal et orienté de la droite vers la gauche ; et
- un axe vertical Z, orienté du bas vers le haut.

Le gabarit 2 est adapté pour positionner les ailes 4 et les plaquettes 6 par rapport à la caisse 8 du véhicule 10 successivement suivant une première direction verticale parallèle à Z, une deuxième direction horizontale longitudinale parallèle à X, et une troisième direction horizontale transversale parallèle à Y.

Le gabarit 2 comprend un cadre porteur fixe 14 destiné à prendre appui de façon immobile sur la caisse 8 et assurant le positionnement des ailes 4 et des plaquettes 6 suivant la direction Z, et un cadre mobile 16 par rapport au cadre porteur 14 suivant les directions X et Y. Le cadre 16 est porté par le cadre 14 et porte les ailes 4 et les plaquettes 6. Le cadre 16 est immobile par rapport au cadre 14 suivant la direction Z, il assure donc le positionnement des ailes 4 et des plaquettes 6 uniquement suivant les directions X et Y.

Comme illustré sur les figures 1 et 2, le cadre porteur 14 comprend quatre pieds d'appui vertical 20 sur quatre surfaces horizontales correspondantes de la caisse 8.

Le cadre porteur 14 comprend des moyens de pré-positionnement et d'immobilisation sur la caisse 8. Il s'agit par exemple de deux pilotes 23 coopérant avec des bols de suspension 24 du véhicule 10.

Le cadre 14 est amené sur les surfaces d'appui 22 par translation suivant la direction Z. Une fois posé, le cadre 14 est immobile, par rapport à la caisse 8, du fait du poids du gabarit 2 et des pilotes 23. Mais en variante le gabarit 2 comprend en outre des moyens de pressage des pieds d'appui 20 sur les surfaces 22.

Le cadre mobile 16 assure ensuite le positionnement des ailes 4 et des plaquettes 6 suivant les directions X et Y. A cet effet, il comprend une structure 26 liée au cadre porteur 14 de telle sorte que la structure 26 est immobile par rapport au cadre porteur 14 suivant la direction Z et possède un débattement suivant les directions X et Y. Le cadre 16 possède également des moyens de préhension et de maintien 28 des ailes 4 et des plaquettes 6 de façon solidaire de la structure 26. Les moyens de préhension et de maintien 28 sont portés par la structure 26.

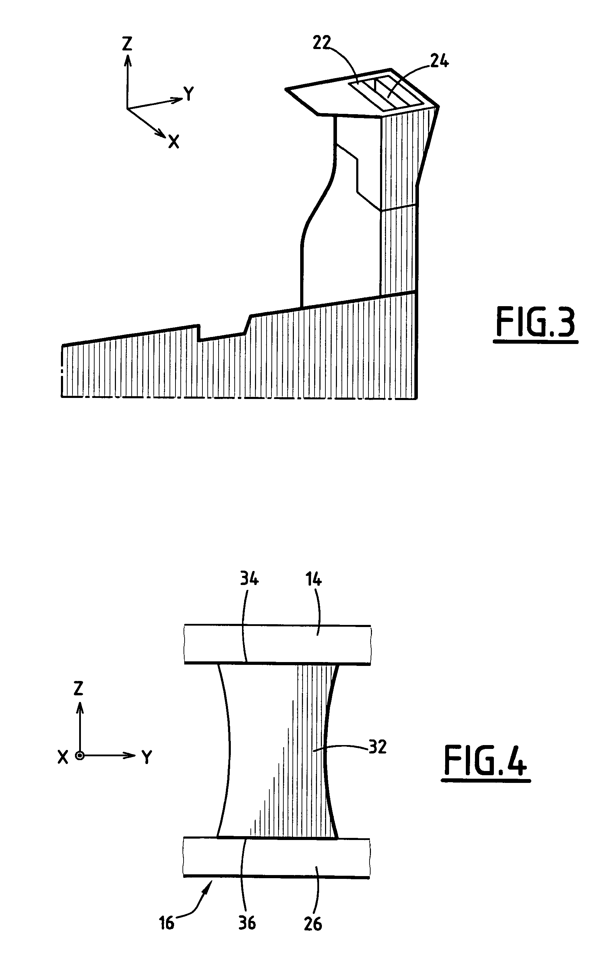

La liaison entre le cadre porteur 14 et la structure 26 est réalisée au moyen d'un appui plan XY et de deux organes élastiques 32 disposés respectivement au niveau des extrémités latérales du cadre porteur 14. Chaque organe élastique 32 a sensiblement une forme de cylindre de révolution évasé en son milieu, c'est-à-dire en forme de diabolo (figure 4). L'organe 32 présente une extrémité supérieure 34 de fixation au cadre porteur 14 et une extrémité inférieure 36 de fixation au cadre mobile 16. L'organe élastique 32 sollicite le cadre mobile 16 vers le haut, à l'encontre de la liaison appui plan entre le cadre mobile 16 et le cadre 14. L'organe élastique 32 assure ainsi le maintien de la liaison appui plan.

En outre, l'organe élastique 32 permet un débattement du cadre 16 suivant les directions X et Y de part et d'autre d'une position centrale de moindre sollicitation de l'organe élastique 32, de l'ordre de quelques mm, par exemple entre 1 et 5 mm, par exemple environ 3 mm.

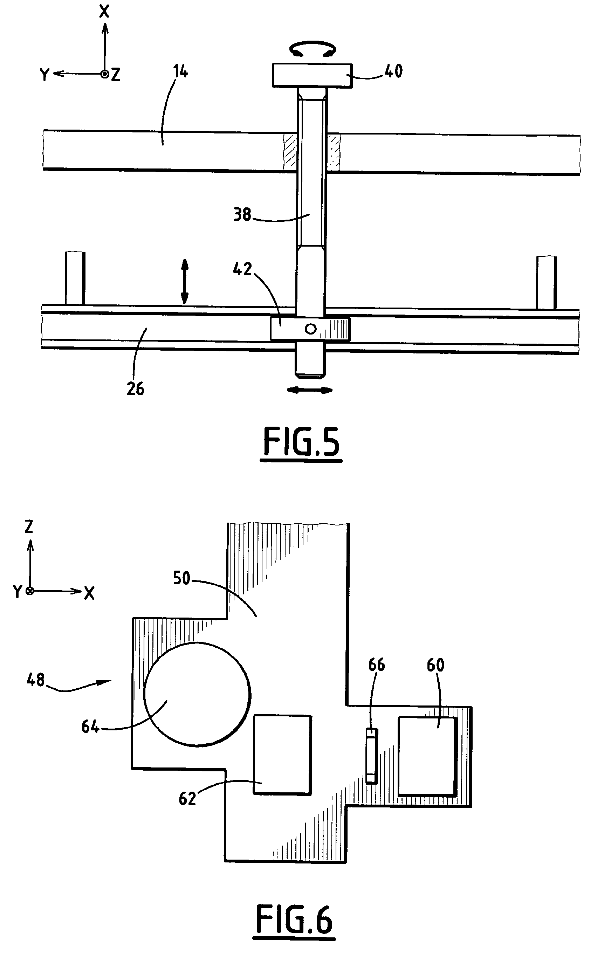

Le gabarit 2 comprend un moyen de déplacement longitudinal 38 (figure 5) adapté pour déplacer la structure 26 par rapport au cadre 14 suivant la direction X tout en permettant une mobilité suivant la direction Y. Il s'agit dans l'exemple illustré d'un vérin à vis comprenant une poignée avant 40 d'actionnement. La vis du vérin 38 coopère avec un filetage prévu sur le cadre 14 et possède une bague 42 solidaire de la vis et solidaire de la structure 26 suivant la direction X tout en étant libre suivant la direction Y.

En variante, le débattement du vérin 38 suivant Y est prévu sur le cadre porteur 14 .

Au moyen du vérin 38, la position de la structure 26 et ainsi des moyens de préhension et de maintien 28 solidaires de la structure 26, est ajustée très précisément suivant la direction X.

Le gabarit 2 comprend également des moyens de centrage 46 de la structure 26 suivant la direction Y.

Les moyens de centrage 46 comprennent deux bras 48 d'appui latéral destinés à prendre appui chacun sur un côté de caisse respectif du véhicule 10. Les bras 48 sont montés coulissants sur la structure 26 suivant la direction Y et reliés entre eux de telle sorte qu'ils sont à tout moment positionnés à égale distance par rapport à un plan vertical longitudinal médian du cadre 16. Les bras 48 sont portés par la structure 26.

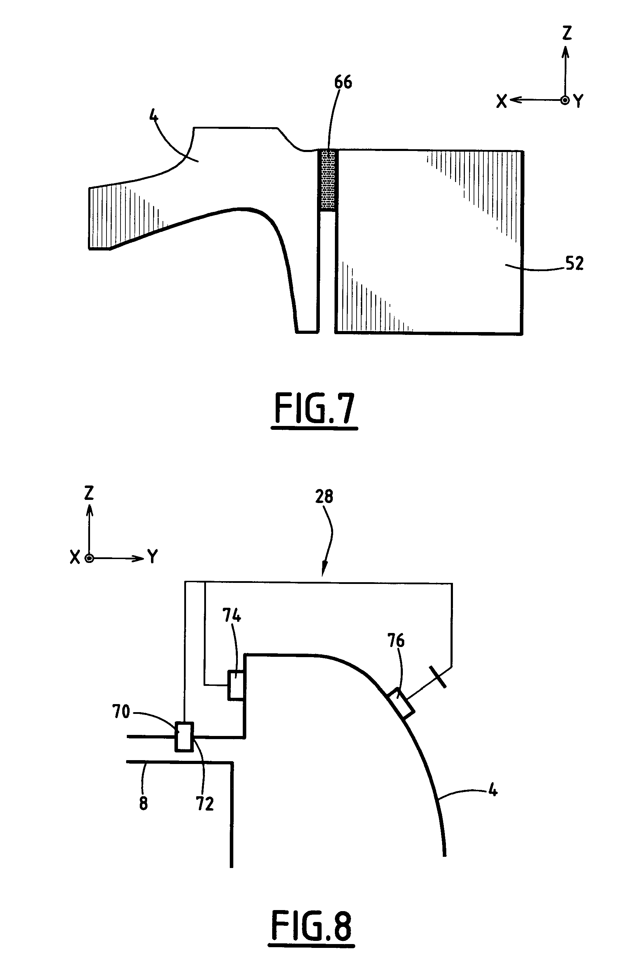

Chaque bras d'appui 48 présente une extrémité externe 50 d'appui sur une porte avant 52 correspondante du véhicule 10 (figures 6 et 7) et sur l'aile 4 correspondante, et comprend une deuxième extrémité opposée 54 articulée par l'intermédiaire d'une biellette 56 à une barre centrale 58 destinée à actionner simultanément les deux bras d'appui 48 pour réaliser le centrage suivant la direction Y de la structure 26 du cadre 16 et ainsi des moyens de préhension et de maintien 28. La barre centrale 58 est montée rotative sur la structure 26 autour de l'axe X, dans un plan vertical longitudinal médian du cadre 16.

La rotation de la barre 58 entraîne simultanément et symétriquement les deux bras d'appui latéral 48 en translation suivant la direction Y l'un vers l'autre lors du centrage du cadre 16. La réaction de la caisse 8 sur les bras d'appui 48 déplace le cadre 16 suivant la direction Y.

Comme illustré sur la figure 6, l'extrémité externe 50 du bras d'appui 48 s'étend sensiblement verticalement et comprend un patin arrière 60 d'appui vertical sur la porte avant, par exemple parallélépipédique, un patin intermédiaire 62 d'appui sur l'aile avant, également parallélépipédique, et une ventouse avant 64 de préhension de l'aile avant. L'extrémité 50 comporte en outre une cale 66 d'appui horizontal sur l'extrémité avant de la porte avant 52 et d'espacement entre la porte avant 52 et l'aile avant 4. Lors du déplacement de la structure 26 du cadre mobile 16 suivant la direction X, les cales 66 viennent en butée contre les portes avant 52. Le déplacement des deux bras 48 suivant la direction Y est ensuite réalisée tout en maintenant les cales 66 en appui sur les portes avant où les frottements sont faibles.

La cale d'appui 66 est, lors de la fixation de l'aile avant 4 sur la caisse 8, disposée entre la porte avant 52 et l'aile avant 4 de telle sorte qu'elle garantit un espacement minimum suivant la direction X entre eux. Cet espacement est nécessaire au débattement en rotation de la porte 52 lors de son ouverture. L'aile 4 est, dans sa position de fixation, en appui contre la cale 66.

Les moyens de préhension et de maintien des ailes avant 4 sont illustrés plus en détail sur la figure 8. Ils sont prévus pour assurer un positionnement prédéterminé de l'aile avant 4 par rapport à la structure 26.

A cet effet, ils comprennent un doigt pilote 70 adapté pour pénétrer un trou correspondant 72 de l'aile 4. La cote en X entre le pilote 70 et la cale 66 servant au positionnement de l'aile 4 par rapport à la porte 52 en X est fixe.

Le maintien de l'aile 4 sur la structure 26 est réalisé par serrage entre plusieurs patins internes d'appui 74 sur une surface interne de l'aile 4 et plusieurs ventouses de préhension 76 de la surface externe de l'aile 4.

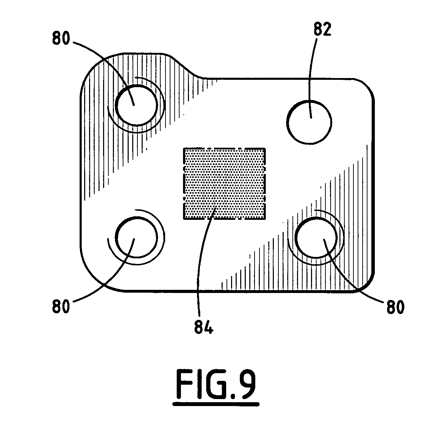

La figure 9 illustre une plaquette romaine 6 prévue pour être fixée à l'aide du gabarit 2.

Chacune des deux plaquettes 6 comprend trois trous filetés 80 de fixation disposés sensiblement au niveau de trois coins de la plaquette 6, et un trou d'indexage 82 formé au niveau du quatrième coin de la plaquette 6. Deux des trous filetés 80 reçoivent des vis de fixation de la plaquette 6 sur la caisse 8, tandis que le troisième sert à la fixation de la façade avant technique. La plaquette 6 comprend également une zone centrale d'appui vertical du cadre 16 prévue pour immobiliser la plaquette 6 suivant la direction Z sur la caisse 8 tout en lui permettant de glisser avec le cadre 16 suivant les directions X et Y. Le trou d'indexage 82 et l'un des trous 80 sont pénétrés par un doigt d'indexage respectif prévu sur le cadre 16 et assurant un positionnement prédéterminé de la plaquette 6 par rapport à la structure 26.

La plaquette 6 est prévissée sur la caisse 8 au moyen des deux vis précitées coopérant avec les deux trous 80 libres (les trous de gauche sur la figure 9).

La plaquette 6 est positionnée au moyen de deux pilotes (dans 80 restant et 82), puis serrée par vissage. Les pilotes sont alors retirés, et la caisse 8 part au stade suivant. Le trou fileté 80 et le trou 82 servent respectivement à la fixation et à l'indexage d'une pièce au montage (par exemple une façade avant technique).

La plaquette 6 est positionnée en X et Y sur le cadre mobile 16 par deux pilotes par exemple à engagement manuel, et donc en relation directe avec l'aile 4. Le placage en Z de la plaquette 6 sur la structure 26 est assuré par des serrages manuels communs à ceux du cadre fixe 14 sur la structure 26.

Avec l'invention, une fois le gabarit 2 posé sur la caisse 8, le positionnement suivant la direction Z des ailes 4 et des plaquettes 6 est assuré. Le cadre mobile 16 et les moyens de préhension et de maintien 28 des éléments de carrosserie ne nécessitent pas d'être mobiles suivant la direction Z par rapport au cadre porteur 14. Les moyens de déplacement 38, 46 suivant les directions X et Y, nécessitent moins d'effort, l'inertie à déplacer suivant les axes X et Y étant réduite, leur dimensionnement est donc limité. Le poids total du gabarit 2 est ainsi faible.

L'invention réduit l'inertie de déplacement en X et Y réduit les frottements sur caisse 8. Elle améliore ainsi la fiabilité du gabarit 2.

Les pilotes 23 du cadre porteur 14 servent à donner une position fixe au cadre porteur 14, déjà plus ou moins correcte sur la caisse 8, la latitude de déplacement du cadre mobile 16 par rapport au cadre porteur 14 étant de préférence de l'ordre de quelques mm. Ceci limite encore davantage le dimensionnement des moyens de déplacement du cadre mobile 16, et donc le poids du gabarit 2.

De plus, les pilotes 23 dans les bols de suspension 24 servent aussi de contre-réaction sur la caisse 8 lors du déplacement du cadre mobile 16 en X lors de son placage sur les portes 52.

Le vérin 38 assure le placage de la cale 66 en X sur les portes 52.

Dans l'exemple illustré, le poids du gabarit est d'environ 140 kg. Son inertie est faible et la fiabilité de positionnement est bonne. En outre, les moyens de déplacement sont peu onéreux et le coût du gabarit 2 est faible.

La structure du cadre porteur 14 et du cadre mobile 16 est de préférence réalisée en carbone, mais le dimensionnement sera à effectuer pour éviter tout fléchissement de la structure sous l'effet du poids.

Il est à noter que les éléments de carrosserie mis en place à l'aide du gabarit 2 ne sont pas limités à des ailes avant 4 et des plaquettes romaines 6, et peuvent être d'autres pièces de type adapté.

Le gabarit 2 assure un positionnement avec une mise en géométrie continue des ailes avant 4 à la fois par rapport aux portes avant 52 et par rapport au capot positionné ultérieurement. L'aspect esthétique général du véhicule est de ce fait satisfaisant.

En variante, la liaison mécanique entre le cadre porteur fixe 14 et le cadre mobile 16 est obtenue par une bille dans un logement ou par deux glissières, de manière à répondre à la fonction de débattement du cadre mobile 16 en X et Y par rapport au cadre fixe 14.

Dans l'exemple illustré, les plaquettes de support 6 servent aux départs de mise en place du capot, mais peuvent également servir de départ aux projecteurs, à l'armature de pare-chocs, et indirectement au pare-chocs.

## Revendications

1. Gabarit (2) de mise en place d'éléments de carrosserie (4, 6) de la face avant d'un véhicule automobile (10), du type comprenant des moyens de préhension et de maintien (28) des éléments de carrosserie (4, 6) à mettre en place, le gabarit (2) étant apte à assurer le positionnement des moyens de préhension et de maintien (28) par rapport à la caisse (8) suivant une première direction verticale (Z) et suivant une deuxième (X) et une troisième (Y) directions horizontales, toutes orthogonales entre elles,
**caractérisé en ce que** le gabarit (2) comporte :
- un cadre porteur (14) destiné à prendre appui verticalement sur la caisse (8) du véhicule (10) et à porter l'ensemble du gabarit (2) ;
- un cadre mobile (16) de mise en place des éléments de carrosserie (4, 6) sur la caisse (8) du véhicule (10), le cadre mobile (16) étant monté mobile sur le cadre porteur (14) et comprenant lesdits moyens de préhension et de maintien (28), le cadre mobile (16) étant apte à assurer le positionnement des éléments de carrosserie (4, 6) suivant la deuxième et la troisième directions (X, Y), le cadre porteur (14) étant apte à assurer le positionnement du cadre mobile (16) suivant la première direction(Z).

2. Gabarit (2) suivant la revendication 1, dans lequel, en position d'appui du cadre porteur (14), le cadre porteur (14) est immobile suivant lesdites première, deuxième et troisième directions, tandis que le cadre mobile (16) est mobile par rapport au cadre porteur (14) uniquement suivant les deuxième et troisième directions (X, Y).

3. Gabarit (2) suivant la revendication 1 ou 2, dans lequel le cadre porteur (14) porte le cadre mobile (16) au moyen d'au moins une liaison élastique sollicitant le cadre mobile (16) en appui plan horizontal sur le cadre porteur (14).

4. Gabarit (2) suivant la revendication 3, dans lequel la liaison élastique comprend un organe élastique (32) fixé à une première extrémité (34) au cadre porteur (14) et fixé à une deuxième extrémité opposée (26) au cadre mobile (16), l'organe élastique (32) assurant au cadre mobile (16) un débattement suivant la deuxième et la troisième directions (X. Y) par rapport à une position centrale de moindre sollicitation, le débattement de part et d'autre de la position centrale étant compris entre 1 mm et 5 mm, par exemple environ 3 mm.

5. Gabarit (2) suivant l'une quelconque des revendications précédentes, comprenant un vérin de déplacement (38) du cadre mobile (16) par rapport au cadre porteur (14) suivant ladite deuxième direction (X), de préférence un vérin (38) à vis.

6. Gabarit (2) suivant l'une quelconque des revendications précédentes, comprenant au moins une cale d'appui (66) suivant ladite deuxième direction sur une porte avant (52) du véhicule (10), la cale d'appui (66) étant destinée à assurer un jeu esthétique et fonctionnel de débattement de la porte avant (52), entre la porte avant (52) et une aile avant (4) maintenue par le cadre mobile (16).

7. Gabarit (2) suivant l'une quelconque des revendications précédentes, comprenant une barre centrale (58) montée rotative sur le cadre mobile (16) autour de ladite première direction (X) et deux bras (48) de centrage du cadre mobile (16) par rapport à la caisse (8) du véhicule automobile (10), la rotation de la barre (58) assurant la translation suivant ladite troisième direction (Y) des bras d'appui (48) de façon symétrique.

8. Gabarit (2) suivant la revendication 7, dans lequel chaque bras d'appui (48) présente une extrémité externe (50) d'appui latéral sur le côté d'une porte avant (52), le centrage du cadre mobile (16) suivant ladite troisième direction (Y) s'effectuant par rapport aux deux portes avant (52) du véhicule automobile (10).

9. Gabarit (2) suivant la revendication 8, dans lequel les moyens de préhension et de maintien (28) des éléments de carrosserie (4, 6) comprennent un patin d'appui (72, 74) et/ou une ventouse de préhension (76) solidaires de l'extrémité externe (50) du bras d'appui (48), la ventouse (76) étant de préférence en regard de l'élément d'appui (74).

10. Gabarit (2) suivant l'une quelconque des revendications précédentes, dans lequel les moyens de préhension et de maintien (28) des éléments de carrosserie (4, 6) comprennent au moins deux éléments d'appui (74) et deux ventouses de préhension (76) solidaires de la structure (26) du cadre mobile (16).

11. Gabarit (2) suivant l'une quelconque des revendications précédentes, dans lequel les moyens de préhension et de maintien (28) comprennent un doigt pilote (70), de préférence à engagement manuel, destiné à pénétrer un trou correspondant (72) de l'élément de carrosserie (4) et assurant le positionnement de l'élément de carrosserie (4, 6) par rapport au cadre mobile (16) dans au moins l'une des deuxième et troisième directions (X, Y).

12. Gabarit (2) suivant l'une quelconque des revendications précédentes, dans lequel les éléments de carrosserie comprennent une aile avant (4) de véhicule automobile (10) et/ou une plaquette (6) de support.

13. Procédé de fabrication d'un véhicule automobile (10) comprenant une caisse (8), le procédé comprenant une étape de fixation d'une aile avant (4) sur la caisse (8) du véhicule (10),
**caractérisé en ce que** le procédé utilise un gabarit (2) selon l'une quelconque des revendications 1 à 12.
le procédé comprenant successivement une étape de :
- montage des ailes avant (4) sur le cadre mobile (16) ;
- positionnement du cadre porteur (14) en appui sur la caisse (8) ;
- positionnement du cadre mobile (16) suivant ladite deuxième direction (X) :
- centrage du cadre mobile (16) suivant ladite troisième direction (Y) ; et
- fixation des ailes avant (4).

## Claims

1. Jig (2) for positioning bodywork elements (4, 6) of the front face of a motor vehicle (10), of the type comprising means (28) for gripping and holding bodywork elements (4, 6) to be positioned, the jig (2) being able to ensure the positioning of the gripping and holding means (28) in relation to the shell (8) in a first vertical direction (Z) and in a second (X) and third (Y) horizontal direction which are all orthogonal to one another, **characterised in that** the jig (2) comprises:
- a support frame (14) intended to bear vertically against the shell (8) of the vehicle (10) and to support the entire jig (2);
- a mobile frame (16) for positioning bodywork elements (4, 6) on the shell (8) of the vehicle (10), the mobile frame (16) being mounted movably on the support frame (14) and comprising said gripping and holding means (28), the movable frame (16) being able to ensure the positioning of bodywork elements (4, 6) in the second and third directions (X, Y), the support frame (14) being able to ensure the positioning of the movable frame (16) in the first direction (Z).

2. Jig (2) according to claim 1, wherein, in the bearing position of the support frame (14), the support frame (14) is fixed in said first, second and third directions, whilst the movable frame (16) is movable in relation to the support frame (14) merely in the second and third directions (X, Y).

3. Jig (2) according to either claim 1 or claim 2, wherein the support frame (14) supports the movable frame (16) by means of at least one resilient connection urging the movable frame (16) to bear in a horizontal plane against the support frame (14).

4. Jig (2) according to claim 3, wherein the resilient connection comprises a resilient member (32) fixed at a first end (34) to the support frame (14) and fixed at a second opposed end (26) to the movable frame (16), the resilient member (32) ensuring that the movable frame (16) has a displacement in the second and third directions (X, Y) in relation to a central position of lesser urging, the displacement on either side of the central position being between 1 mm and 5 mm, for example approximately 3 mm.

5. Jig (2) according to any one of the preceding claims, comprising a jack (38) for displacing the movable frame (16) in relation to a support frame (14) in said second direction (X), preferably a screw jack (38).

6. Jig (2) according to any one of the preceding claims, comprising at least one block (66) bearing in said second direction (X) against a front door (52) of the vehicle (10), the bearing block (66) being intended to ensure an aesthetic and functional play of displacement of the front door (52) between the front door (52) and a front wing (4) held by the movable frame (16).

7. Jig (2) according to any one of the preceding claims, comprising a central bar (58) mounted rotatably on the movable frame (16) about said first direction (X) and two arms (48) for centring the movable frame (16) in relation to the shell (8) of the motor vehicle (10), the rotation of the bar (58) ensuring the translation in said third direction (Y) of the bearing arms (48) in a symmetrical manner.

8. Jig (2) according to claim 7, wherein each bearing arm (48) has an outer end (50) for lateral bearing against the side of a front door (52), the centring of the movable frame (16) in said third direction (Y) being achieved in relation to the two front doors (52) of the motor vehicle (10).

9. Jig (2) according to claim 8, wherein the means (28) for gripping and holding bodywork elements (4, 6) to be positioned comprise a bearing runner (72, 74) and/or a gripping sucker (76) attached to the outer end (50) of the bearing arm (48), the sucker (76) preferably being opposite the bearing runner (74).

10. Jig (2) according to any one of the preceding claims, wherein the means (28) for gripping and holding the bodywork elements (4, 6) to be positioned comprise at least two bearing elements (74) and two gripping suckers (76) attached to the structure (26) of the movable frame (16).

11. Jig (2) according to any one of the preceding claims, wherein the means (28) for gripping and holding bodywork elements (4, 6) to be positioned comprise a guiding finger (70), preferably to be engaged manually, for penetrating a corresponding hole (72) in the bodywork element (4) and ensuring the positioning of the bodywork element (4, 6) in relation to the movable frame (16) in at least one of the second and third directions (X, Y).

12. Jig (2) according to any one of the preceding claims, wherein the bodywork elements to be positioned comprise a front wing (4) of the motor vehicle (10) and/or a support plate (6).

13. Method for producing a motor vehicle (10) comprising a shell (8), the method comprising a step of fixing a front wing (4) to the shell (8) of the vehicle (10), **characterised in that** the method uses a jig (2) according to any one of claims 1 to 12, the method subsequently comprising a step of:
- mounting front wings (4) on the movable frame (16);
- positioning the support frame (14) so as to bear against the shell (8);
- positioning the movable frame (16) in said second direction (X);
- centring the movable frame (16) in said third direction (Y); and
- fixing the front wings (4).

## Patentansprüche

1. Montagelehre (2) zum Anbringen von Karosserieelementen (4, 6) des Vorderwagens eines Kraftfahrzeugs (10) in der Art, dass sie Vorrichtungen zum Greifen und Festhalten (28) der anzubringenden Karosserieelemente (4, 6) umfasst, wobei die Montagelehre (2) in der Lage ist, für die Positionierung der Vorrichtungen zum Greifen und Festhalten (28) in Bezug auf die Karosserie (8) entsprechend einer ersten vertikalen Richtung (Z) und entsprechend einer zweiten (X) und einer dritten horizontalen Richtung (Y) zu sorgen, die alle jeweils rechtwinkelig zueinander stehen,
**dadurch gekennzeichnet, dass** die Montagelehre (2) folgendes umfasst:
- einen Trägerrahmen (14), der dazu bestimmt ist, sich vertikal auf der Karosserie (8) des Fahrzeugs (10) abzustützen, und die Baugruppe der Montagelehre (2) zu tragen;
- einen beweglichen Rahmen (16) zum Anbringen der Karosserieelemente (4, 6) auf der Karosserie (8) des Fahrzeugs (10), wobei der bewegliche Rahmen (16) mobil auf dem Trägerrahmen (14) montiert ist, und die besagten Vorrichtungen zum Greifen und Festhalten (28) umfasst, und der bewegliche Rahmen (16) in der Lage ist, für die Positionierung der Karosserieelemente (4, 6) entsprechend der zweiten und dritten Richtung (X, Y) zu sorgen, wobei der Trägerrahmen (14) in der Lage ist, für die Positionierung des beweglichen Rahmens (16) entsprechend der ersten Richtung (Z) zu sorgen.

2. Montagelehre (2) nach Anspruch 1, bei der der Trägerrahmen (14) in der abgestützten Position des Trägerrahmens (14) in die besagte erste, zweite und dritte Richtung unbeweglich ist, während der bewegliche Rahmen (16) in Bezug auf den Trägerrahmen (14) nur in die zweite und dritte Richtung (X, Y) beweglich ist.

3. Montagelehre (2) nach Anspruch 1 oder 2, bei der der Trägerrahmen (14) den beweglichen Rahmen (16) anhand zumindest einer elastischen Verbindung trägt, die den beweglichen Rahmen (16) horizontal und eben gegen den Trägerrahmen (14) drückt.

4. Montagelehre (2) nach Anspruch 3, bei der die elastische Verbindung ein elastisches Organ (32) umfasst, das mit seinem ersten Ende (34) am Trägerrahmen (14), und mit seinem zweiten gegenüberliegenden Ende (26) am beweglichen Rahmen (16) befestigt ist, wobei das elastische Organ (32) dem beweglichen Rahmen (16) einen Ausschlag in die zweite und in die dritte Richtung (X, Y) in Bezug auf eine Mittelstellung mit geringster Beanspruchung ermöglicht, und der Ausschlag beiderseits der Mittelstellung zwischen 1 mm und 5 mm, beispielsweise 3 mm beträgt.

5. Montagelehre (2) nach irgendeinem der vorherigen Ansprüche, umfassend einen Schubzylinder (38) des mobilen Rahmens (16) in Bezug auf den Trägerrahmen (14) in die besagte zweite Richtung (X), der vorzugsweise eine Schraubenwinde (38) ist.

6. Montagelehre (2) nach irgendeinem der vorherigen Ansprüche, umfassend zumindest einen Einstellblock (66) in die besagte zweite Richtung (X) auf einer Vordertüre (52) des Fahrzeugs (10), wobei der Einstellblock (66) dazu bestimmt ist, für ein ästhetisches und funktionales Schwenkspiel der Vordertüre (52) zwischen der Vordertüre (52) und einem Vorderflügel (4) zu sorgen, der vom beweglichen Rahmen (16) festgehalten wird.

7. Montagelehre (2) nach irgendeinem der vorherigen Ansprüche, umfassend eine mittlere Stange (58), die drehend auf dem beweglichen Rahmen (16) um die besagte erste Richtung (X) montiert ist, und zwei Arme (48) zum Zentrieren des beweglichen Rahmens (16) in Bezug auf die Karosserie (8) des Kraftfahrzeugs (10), wobei die Drehung der Stange (58) für den Vorschub der Auflagearme (48) in symmetrischer Form in die besagte dritte Richtung (Y) sorgt.

8. Montagelehre (2) nach Anspruch 7, bei der der Auflagearm (48) ein äußeres Ende (50) zur seitlichen Auflage an der Seite einer Vordertüre (52) aufweist, wobei die Zentrierung des beweglichen Rahmens (16) in die besagte dritte Richtung (Y) in Bezug auf die beiden Vordertüren (52) des Kraftfahrzeugs (10) erfolgt.

9. Montagelehre (2) nach Anspruch 8, bei der die Vorrichtungen zum Greifen und Festhalten (28) der anzubringenden Elemente der Karosserie (4, 6) einen Auflagepuffer (72, 74) und/ oder einen Greifersaugnapf (76) umfassen, die fest mit dem äußeren Ende (50) des Auflagearms (48) verbunden sind, wobei sich der Saugnapf (76) vorzugsweise gegenüber dem Auflagepuffer (74) befindet.

10. Montagelehre (2) nach irgendeinem der vorherigen Ansprüche, bei der die Vorrichtungen zum Greifen und Festhalten (28) der anzubringenden Elemente der Karosserie (4, 6) zumindest zwei Auflageelemente (74) und zwei Greifersaugnäpfe (76) umfassen, die fest mit der Struktur (26) des beweglichen Rahmens (16) verbunden sind.

11. Montagelehre (2) nach irgendeinem der vorherigen Ansprüche, bei der die Vorrichtungen zum Greifen und Festhalten (28) der anzubringenden Elemente der Karosserie (4, 6) einen vorzugsweise von Hand einzuführenden Steuerungsstift (70) umfasst, der dazu bestimmt ist, in ein entsprechendes Loch (72) des Karosserieelements (4) eingeführt zu werden, und der für die Positionierung des Karosserieelements (4, 6) in Bezug auf den beweglichen Rahmen (16) in zumindest der zweiten oder der dritten Richtungen (X, Y) sorgt.

12. Montagelehre (2) nach irgendeinem der vorherigen Ansprüche, bei der die anzubringenden Elemente der Karosserie einen Vorderflügel (4) des Kraftfahrzeugs (10) und/ oder eine Halteplatte (6) umfassen.

13. Verfahren zum Herstellen eines Kraftfahrzeugs (10) umfassend eine Karosserie (8), wobei das Verfahren einen Schritt zum Befestigen eines Vorderflügels (4) auf der Karosserie (8) des Fahrzeugs (10) umfasst,
**dadurch gekennzeichnet, dass** das Verfahren eine Montagelehre (2) nach irgendeinem der Ansprüche 1 bis 12 umfasst,
wobei das Verfahren nach und nach einen der folgenden Schritte umfasst:
- Montage der Vorderflügel (4) auf den beweglichen Rahmen (16);
- Positionierung des Tragerahmens (14) anliegend auf der Karosserie (8);
- Positionierung des beweglichen Rahmens (16) in die zweite Richtung (X);
- Zentrierung des beweglichen Rahmens (16) in die besagte dritte Richtung (Y); und
- Befestigung der Vorderflügel (4).
